# EUROPÄISCHE PATENTANMELDUNG

(11) **EP 0 978 492 A1**
(43) Veröffentlichungstag der Anmeldung: **09.02.2000**
(21) Anmeldenummer: 99113903.1
(22) Anmeldetag: 16.07.1999
(51) Int. Cl.: C03B 40/027, C03B 23/03, C03B 9/447

(54) **Verfahren zur Verringerung des Heissverklebens bei Formgebungsprozessen sowie Vorrichtung zur Durchführung dieses Verfahrens**

(30) Priorität: 04.08.1998 FR 9810004
(71) Anmelder: CERDEC AKTIENGESELLSCHAFT KERAMISCHE FARBEN, D-60327 Frankfurt (DE)
(72) Erfinder: Ribes, Michel, 34830 Clapiers (FR); Papet, Philippe, 34730 Prades Le Lez (FR); Thomas, Corinne, 75014 Paris (FR); Anquetil, Jerome, 87400 Saint-Leonard (FR)

(57) **Zusammenfassung**

Mit Hilfe des Verfahrens werden die Heißverklebungsprobleme zwischen einem zu fo rmenden nichtmetallischen anorganischen Material (= Isolator) und einer Formmatrize dadurch überwunden, daß man den Aufbau aus Formmatrize und Isolator während der Formgebung in polarisiertem Zustand hält. Die Prozesse, bei denen man nach diesem Verfahren arbeitet, führen zu einer verbesserten Oberflächengüte des geformten Isolators. Die Vorrichtung zur Verringerung des Heißverklebens umfaßt eine als Leiter dienende Matrize (2), eine Elektrode (3), die als Träger für den zu formenden Isolator (1) dienen kann, sowie Mittel (5) zur Polarisierung des Aufbaus aus Leiter, Isolator und Elektrode, wobei diese Mittel (5) mit unter Spannung stehenden elektrischen Drähten (4) an die Matrize und die Elektrode angeschlossen sind.

## Beschreibung

Die vorliegende Erfindung betrifft ein Verfahren zur Verringerung und insbesondere zur Beseitigung des Heißverklebens zwischen einer Matrize, insbesondere einer elektrisch leitenden Matrize, und einem nichtmetallischen anorganischen Material (= Isolator), insbesondere einem Isolator, der zumindest teilweise in glasartigem Zustand vorliegt, wobei die Matrize und der Isolator bei einer Temperatur, bei der der Isolator verformbar ist, miteinander in Kontakt stehen.

Die Erfindung betrifft weiterhin ein Verfahren zur Herstellung eines geformten Isolators mit einwandfreier Oberflächengüte unter Verwendung des oben angegebenen Verfahrens.

Schließlich betrifft die Erfindung eine Vorrichtung zur Durchführung des Verfahrens.

### STAND DER TECHNIK

Zahlreiche unerwünschte Heißverklebungserscheinungen, die bei komplizierten technischen Prozessen auftreten, lassen sich auf das allgemeine Problem des Heißverklebens zwischen einer Formmatrize, die in der Regel aus Metal oder einem anderen elektrisch leitenden Material gefertigt ist, und einem nichtmetallischen anorganischen Material (= Isolator), insbesondere einem anorganischen Isolator, wie Glas, Emaille oder Keramik, zurückführen, wobei mindestens eine der Phasen, aus dem es aufgebaut ist, bei der betreffenden Temperatur in viskosem Zustand vorliegt.

Beim Heißformen dieser anorganischen Isolationsmaterialien, wie Glas, Emaille oder deren Kombinationen, bei einer Temperatur, bei der diese Materialien eine Viskosität zwischen 1 und 10.000 kPa (= 10⁴ und 10⁸ Poises) aufweisen, findet man Verklebungserscheinungen zwischen den Isolationsmaterialien und der Formmatrize bzw. der Form. Die Formmatrize kann vollständig aus Metall oder aus mit einem metallischen Überzug beschichteter Keramik oder auch aus einer Metallegierung oder aus einer mit einem bei der Formgebungstemperatur ausreichend elektrisch leitenden keramischen Überzug beschichteten Keramik bestehen. Der diesen Viskositäten entsprechende Temperaturbereich schwankt je nach der Zusammensetzung. Er reicht von 500 bis 1000°C bei bestimmten technischen Natronkalksilikatgläsern. Diese Erscheinungen sind im Laufe der Entwicklung neuer Techniken aufgetreten. Hier handelt es sich beispielsweise um:
1. Verkleben von geschmolzenem Glas mit der Metallform bei der Herstellung von Flakons, Flaschen oder Kelchgläsern.
2. Verkleben von Emaille (Mischung aus Glas in Pulverform (Fritte) und einem kristallisierten Farbmittel (Pigment)) mit der metallischen Formmatrize bei der Formgebung von Autoverglasungen.

Diese Liste ist keineswegs erschöpfend.

Für das Emaille von Autoverglasungen wurden bestimmte Lösungen gefunden:
- Zugabe von Zink- und Zinnoxiden oder Kupfersulfaten, die als Antihaftkomponenten dienen, d.h., daß sie aus Komponenten bestehen, die zur Antihaftfähigkeit beitragen - US 4,684,388 (Ford Motor Company) und US 4,828,596 (Ciba-Geigy Corporation).
- Entwicklung von Glasfritten, die im Ofen umkristallisieren - EP 0 370 683 Al (Johnson Matthey Public Limited Company) und US 5,153,150 (Ferro Corporation).

Diese Arten von Lösungen sind jedoch nur Teillösungen. Der Erfolg dieser Zusammensetzungen hängt in hohem Maße von den Formgebungsbedingungen und ganz besonders vom Erhitzungszyklus des Emailles im Ofen ab.

Der vorliegenden Erfindung liegt die Aufgabe zugrunde, die Verklebungsprobleme ohne Auswirkung auf die Zusammensetzungen einzuschränken.

Ein weiteres Ziel der Erfindung besteht in der Entwicklung eines Verfahrens für jede beliebige Art von Formgebung für mindestens teilweise glasartige anorganische Materialien, das zu einer besseren Oberflächengüte des Formgegenstands führt, indem die Heißverklebungsprobleme beseitigt oder zumindest verringert werden.

Ein weiteres Ziel der Erfindung betrifft eine Vorrichtung mit der üblichen Ausstattung, mit deren Hilfe diese Formgebung durchgeführt werden kann und Mittel, mit denen sich das Problem des Verklebens verringern oder im wesentlichen vermeiden läßt.

### Darstellung der Erfindung

Die vorliegende Erfindung beseitigt Heißverklebungsprobleme, indem ein zu verformendes nichtmetallisches anorganisches Material (= Isolator) in einem elektrischen Feld mit einer Formmatrize bei den für den Formgebungsvorgang erforderlichen erhöhten Temperaturen in Kontakt gebracht wird.

Gefunden wurde somit ein Verfahren zur Verringerung des Heißverklebens zwischen einer Matrize und einem nichtmetallischen anorganischen Material (= Isolator), die bei einer Temperatur, bei der der Isolator verformbar ist, miteinander in Kontakt stehen, das dadurch gekennzeichnet ist, daß man einen Aufbau aus der Matrize und dem Isolator während der Kontaktierung in einem polarisierten Zustand hält, so daß die Fläche der mit dem Material in Kontakt kommenden Matrize positiv und die Fläche des mit der Matrize in Kontakt stehenden Materials negativ aufgeladen ist.

Vorzugsweise besteht der Isolator im wesentlichen aus anorganischen Materialien, wie Glas, Emaille oder Keramik, wobei mindestens ein Teil des in Kontakt mit der Matrize kommenden Materials in glasartiger Form vorliegt.

Wie weiter oben bereits angedeutet, kann die Matrize aus einem Metall, Metallegierungen oder Kombinationen aus Keramik und Metall, Keramik und Halbleiter oder anderen Kombinationen bestehen, unter der Bedingung, daß die Überzugsschicht des Leiters aus einem bei der Betriebstemperatur ausreichend elektrisch leitenden Material gefertigt ist.

Die vorliegende Erfindung wird somit vorzugsweise auf Systeme aus anorganischem Isolator/Formmatrize bei den zur Formgebung von Glas notwendigen Temperaturen angewandt.

Das zu formende nichtmetallische anorganische Material ist bei Umgebungstemperatur ein Isolator, wird jedoch während der Wärmebehandlung bei der Einbrenn- und/oder Formgebungstemperatur elektrisch leitend. Die Ionenleitfähigkeit des glasartigen Teils, beispielsweise einer Emailleschicht, ermöglicht bei der Einbrenn-/Formgebungstemperatur Ladungsübertragungen von einer auf die andere Seite der Schicht.

Diese Polarisation ist nach jedem beliebigen bekannten Verfahren zur Erzeugung eines elektrischen Felds, beispielsweise durch Anlegen einer Spannung oder eines Stroms an den Aufbau mittels eines Plattenkondensators, dessen Beläge (= Platten) auf beiden Seiten des Aufbaus angebracht werden, oder durch Induzieren eines Stroms an der Isolator-Matrizen-Grenzfläche erziel- und aufrechterhaltbar.

Die Erfindung betrifft ebenfalls ein Verfahren zur Herstellung eines geformten nichtmetallischen anorganischen Materials (= Isolator) mit verbesserter Oberflächengüte, das darin besteht, daß man ein nichtmetallisches anorganisches Material (= Isolator) mit einer Formmatrize bei einer Formgebungstemperatur in Kontakt bringt, so daß der Isolator verformt wird, und man anschließend den geformten Isolator und die Formmatrize voneinander trennt, dadurch gekennzeichnet, daß man den Aufbau aus Isolator und Matrize polarisiert, so daß die dem Isolator zugewandte Fläche der Matrize positiv aufgeladen und die der Matrize zugewandte Fläche des Isolators negativ aufgeladen wird, und daß man die Polarisation während des Kontakts bis zum Zeitpunkt der Trennung aufrechterhält.

Gemäß weiteren Ausführungsformen der Erfindung
- liegt mindestens ein Teil des mit dem Leiter in Kontakt kommenden Isolators in glasartigem Zustand vor,
- ist zumindest der mit dem glasartigen Teil des Isolators in Kontakt kommende Teil der Matrize aus Metall, einer Metallegierung oder einem Halbleiter gefertigt,
- weist der zu polarisierende Aufbau weiterhin eine Elektrode auf, so daß die Matrize sich als Anode und der Isolator sich als Kathode verhält,
- erfolgen die Polarisation und ihre Aufrechterhaltung dadurch, daß man (i) an den Aufbau eine Spannung oder einen Strom anlegt oder (ii) den Aufbau parallel zwischen die negative Klemme und die positive Klemme eines Plattenkondensators bringt, dessen Platten an eine Strom- oder Spannungsquelle angeschlossen sind oder (iii) an der Isolator-Matrizen-Grenzfläche einen Strom induziert,
- ist der Isolator ein Autoglas, das zumindest teilweise mit einer in einem Ofen einbrennbaren Dekorationsschicht versehen ist,
- werden die Matrize, der Isolator und eine Elektrode, auf der dieser Isolator so aufgebracht ist, daß die Elektrode als Gegenstück zur Matrize dient, bei einer zum Einbrennen der Schicht im Ofen ausreichend hohen Temperatur miteinander verpreßt werden, so daß das Glas unter Aufrechterhaltung der Polarisation gekrümmt werden kann, und
- wird der Isolator durch Blasen so geformt, daß die als Anode dienende Formmatrize (= Matrize), die auf der einen Seite des Isolators angebracht ist, und ein als Kathode dienendes elektrisch leitendes Element (= Elektrode), das auf der anderen Seite des Isolators angebracht ist, zur Polarisierung des im wesentlichen aus Matrize, Isolator und Elektrode bestehenden Aufbaus an eine Spannungs- oder Stromquelle angeschlossen werden.

Schließlich betrifft die Erfindung eine Vorrichtung zur Verringerung des Heißverklebens einer Matrize mit einem nichtmetallischen anorganischen Material (= Isolator), die miteinander in Kontakt stehen, in einem Formgebungsvorgang bei einer Formgebungstemperatur, dadurch gekennzeichnet, daß sie eine als Leiter dienende Matrize, eine Elektrode, die als Gegenstück zur Matrize dienen kann, und/oder einen Träger für einen zu formenden Isolator, wobei die Elektrode der Matrize in einem mindestens der Dicke des Isolators entsprechenden Abstand gegenüberliegt, sowie Mittel zur Polarisierung des Aufbaus aus Leiter, Isolator und Elektrode umfaßt, wobei diese Mittel mit unter Spannung stehenden elektrischen Drähten mit der Matrize und der Elektrode oder mit den zwei Platten eines Kondensators vom Typ Plattenkondensator verbunden sind, wobei diese Platten auf jeder Seite des Aufbaus angeordnet sind.

Gemäß einem weiteren Merkmal der Erfindung umfassen die Mittel eine Strom- oder eine Spannungsquelle.

Außerdem muß, wenn man sich dazu entschließt, die Polarisation durch Anlegen einer Spannung zu erzeugen, die zur Verringerung des Verklebens notwendige Spannung auf das System eingestellt werden, das beispielsweise durch die Art und die Dicke des Isoliermaterials, die Art der Formmatrize bzw. Form, die Geometrie des Systems sowie die Formgebungsbedingungen, wie z.B. den Druck und die Temperatur beeinflußt wird.

Arbeitet man bei Formgebungsverfahren nach dem erfindungsgemäßen Verfahren, so erhält man aufgrund des Fehlens von Heißverklebungsdefekten eine verbesserte Oberflächengüte des Formgegenstands.

### Kurze Beschreibung der Zeichnungen

Die vorliegende Erfindung wird nachstehend anhand der in den beigefügten Zeichnungen dargestellten Ausführungsformen ausführlicher beschrieben.

Es zeigen:
- Abbildung 1 eine schematische Darstellung des Prinzips der Erfindung zur weitgehenden Verringerung der Heißverklebungserscheinungen an der Grenzfläche zwischen einem anorganischen Isolator und einer Matrize;
- Abbildung 2 eine schematische Darstellung der Formgebung von Autoverglasungen unter Verwendung einer mit einem Metall- oder Keramiküberzug beschichteten Formmatrize;
- Abbildung 3 eine schematische Darstellung der Formgebung von Glasgegenständen in Metallformen;
- Abbildung 4a eine schematische Darstellung der Anschlüsse, mit deren Hilfe man das Verkleben des auf Autoverglasungen abgeschiedenen Emailles mit dem Überzug der Formmatrize solcher Verglasungen verringern kann;
- Abbildung 4b einen Querschnitt der Abbildung 4a;
- Abbildung 5 ein Beispiel für ein System zur Formgebung von Autoverglasungen unter Verwendung des Prinzips, bei dem ein Kondensator den Aufbau aus Formmatrize, Verglasung und Verglasungsträger umschließt;
- Abbildung 6a eine Fotografie der Oberfläche einer emaillierten Glasplatte nach dem nicht erfindungsgemäßen Kontakt des Emailles mit einer mit einem Stahldrahtgeflecht (Stahl 316L, einer der für diesen Zweck am häufigsten verwendeten Stähle) überzogenen Formmatrize unter den üblichen Formgebungsbedingungen;
- Abbildung 6b eine Fotografie der Oberfläche der gleichen emaillierten Glasplatte nach dem erfindungsgemäßen Kontakt des Emailles mit der gleichen Formmatrize unter den gleichen Temperatur- und Preßkraftbedingungen wie bei der Prüfung gemäß Abbildung 6a, wobei auf das System eine kontinuierliche Spannung gemäß dem Diagramm aus Abbildung 1 angelegt wurde;
- Abbildung 7 ein Diagramm, das die Klebekraft in Abhängigkeit von der an die Fritte und das Emaille gemäß Beispiel 1 angelegten Spannung zeigt; sowie
- Abbildung 8 ein Diagramm, das die Klebekraft in Abhängigkeit von der Temperatur bei einer Spannung von 0 V, 4,5 V und 9 V zeigt.

### Ausführliche Beschreibung der Erfindung

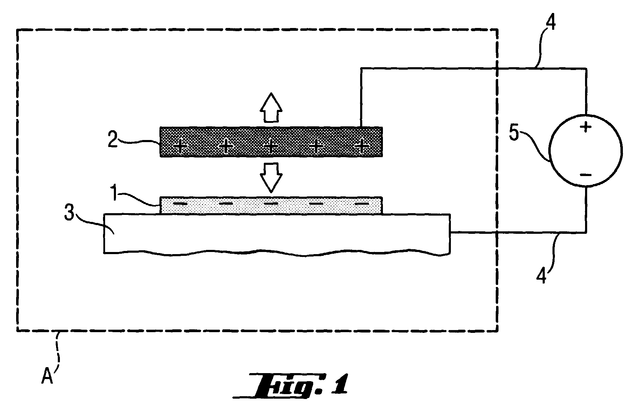

Das Prinzip der Erfindung wird anhand der Abbildung 1 beschrieben, die eine bevorzugte Ausführungsform der Erfindung zeigt. Ganz allgemein umfaßt die Vorrichtung zur Verringerung des Heißverklebens bei Formgebungsprozessen für einen anorganischen Isolator 1 zwei Hauptelemente: Eine Matrize 2, die zumindest bei der Formgebungstemperatur elektrisch leitend ist und als Leiter dient, und eine Elektrode 3, die auch als Träger für den Isolator dienen kann. Die Matrize (= Leiter) 2 und/oder die Elektrode 3 sind gegeneinander verschiebbar, damit der zu verformende Isolator mit der Matrize in Kontakt gebracht werden kann. Eine Strom- oder Spannungsquelle 5 wird mit unter Spannung stehenden elektrischen Drähten 4, die bei den fraglichen erhöhten Temperaturen nicht oxidierbar sind, wie z.B. Drähten aus Platin, Gold oder einem anderen nicht oxidierbaren Metall oder einer nicht oxidierbaren Metallegierung, an die Matrize und die Elektrode angeschlossen. Nach dem Einschalten der Strom- bzw. Spannungsquelle zwecks Polarisierung des Aufbaus aus Matrize, Isolator und Elektrode lädt sich der Leiter auf der Fläche, die mit dem Isolator in Kontakt kommen soll, positiv auf. Umgekehrt lädt sich die Fläche des Isolators, die mit dem Leiter in Kontakt kommen soll, negativ auf.

Bei der Strom- bzw. Spannungsquelle kann es sich um eine Gleichstrom- bzw. Gleichspannungsquelle, wie z.B. eine Trockenbatterie oder einen Akku, oder um eine Wechselstrom- bzw. Wechselspannungsquelle handeln, wobei der Wechselstrom bzw. die Wechselspannung umgewandelt oder gleichgerichtet wird. Handelt es sich um eine Gleichstromquelle, so werden die positive und die negative Klemme der Quelle vorzugsweise an den Leiter bzw. an die mit dem Isolator in Kontakt stehende Elektrode angeschlossen. Handelt es sich um eine Wechselstrom- bzw. Wechselspannungsquelle, so muß die vorherrschende Polung die gleiche sein wie im Falle der Gleichstrom- bzw. Gleichspannungsquelle, und außerdem muß die Zeitdauer, während der die Polung umgekehrt wird oder Null ist, ausreichend kurz sein, damit die Polung an den Klemmen des Isolator-Leiter-Systems nicht umgekehrt wird oder damit das System nicht depolarisiert wird.

Es ist ebenfalls möglich, durch Induktion an der Isolator-Leiter-Grenzfläche einen Strom zu erzeugen. Möglicherweise müssen dann die unter Spannung stehenden elektrischen Drähte miteinander verbunden werden, damit das System polarisiert werden kann. In diesem Fall kann die Stromquelle nicht mehr wie in Abbildung 1 dargestellt werden. Dennoch wurde zur einfacheren Darstellung des Systems beschlossen, diese Vereinfachung auch für die Stromerzeugung durch Induktion beizubehalten.

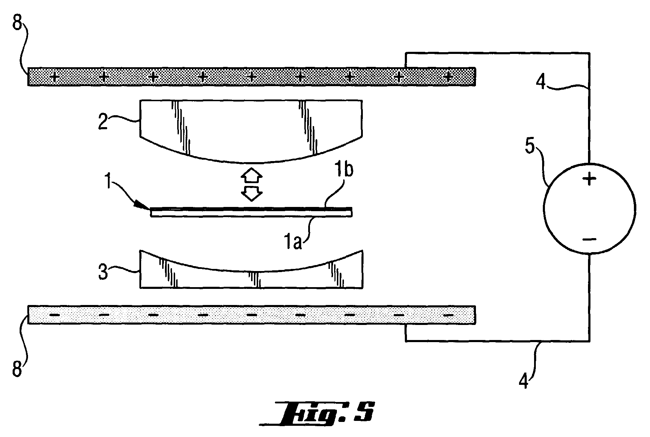

Eine weitere Ausführungsform zur Polarisierung des Aufbaus aus Leiter, Isolator und Elektrode beruht auf der Verwendung eines Kondensators vom Plattenkondensatortyp, dessen Beläge (= Platten) auf beiden Seiten des Aufbaus angeordnet sind. Einige zusätzliche Einzelheiten werden weiter unten anhand der Abbildung 5 beschrieben.

In Abbildung 1 stellen der mit dem Großbuchstaben A bezeichnete Kasten und die gestrichelte Linie, die den Aufbau aus Matrize (= Leiter) 2, Isolator 1 und Elektrode 3 umgeben, Mittel zur Zuführung der für den Formgebungsvorgang erforderlichen Wärme an das System dar.

In der Beschreibung der vorliegenden Anmeldung umfaßt der Ausdruck "Formgebung" alle Prozesse, nach denen ein Isolator mit einer beliebigen Art von leitender Formmatrize in direkten Kontakt, meistens in intensiven Kontakt, kommt, unabhängig davon, ob die Form des Isolators geändert wird und unabhängig davon, inwieweit diese Form geändert wird. In aller Regel wird die Form geändert. So umfaßt der Ausdruck "Formgebung" ebenfalls Verfahren wie Pressen, Biegen und Biegen in einer Presse. Analog umfaßt der Begriff "Formmatrize" Matrizen wie jene, bei denen die Form des Isolators nicht oder nur leicht geändert wird.

Vorzugsweise wird der Aufbau aus Matrize (= Leiter), Isolator und Elektrode in den polarisierten Zustand überführt, und dann wird der Leiter bei einer Temperatur T, bei der die Formgebung durchgeführt werden kann, und einem diese Formgebung ermöglichenden Druck mit dem heißen Isolator in Kontakt gebracht und anschließend unter Aufrechterhaltung der Polarisation vom Isolator getrennt, da jegliches Problem des Verklebens zwischen den zwei Materialien vermieden werden soll.

Wird das System mittels einer Spannung polarisiert, so muß man eine auf das System eingestellte Spannung wählen.

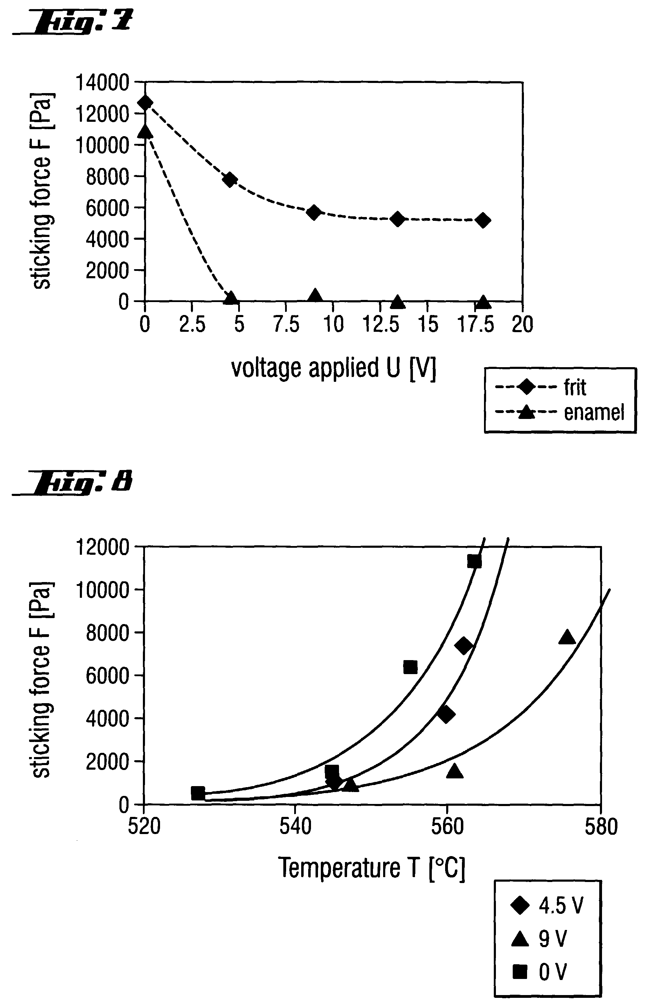

Wie aus Abbildung 7 ersichtlich, in der die Verhältnisse für eine Fritte und ein Emaille dargestellt sind, sinkt die Klebekraft F bei Erhöhung der Spannung von mehr als 1 · 10⁴ Pa auf einen Schwellenwert F von etwa 5 · 10³ Pa für die Fritte und von etwa Null für das Emaille.

Es existiert eine Spannungsschwelle U, oberhalb derer der Wert für die Klebekraft konstant wird. Möglicherweise sinkt die Klebekraft noch weiter, doch geschieht dies bei viel höheren Spannungswerten, die außerhalb des Rahmens dieser Abbildung liegen.

Der Spannungsschwellenwert U ist abhängig vom System und ganz besonders von dessen elektrischem Widerstand, der eine Funktion der Stärke des Isolationsmaterials, aus dem das System besteht, und des spezifischen Widerstands dieses Materials ist. Er hängt ebenfalls von der Qualität der Kontakte zwischen den verschiedenen Elementen des Stromkreises, d.h. vom Widerstand der elektrischen Kontakte des Stromkreises, ab. Die gleiche Feststellung trifft auch auf den Mindestwert F der Klebekraft zu. Dieser Wert F hängt ebenfalls von der Klebekraft im nicht polarisierten Zustand des Systems, d.h. bei Fehlen eines elektrischen Felds, ab.

Einige Anwendungen der vorliegenden Erfindung werden nachstehend beschrieben:

### 1. Autoverglasungen:

Autoverglasungen, vorzugsweise für Pkws, weisen auf einer Glasplatte gebildete Muster auf, wobei diese Muster meistens schwarz sind und aus einem Emaille bestehen. Die Glasplatten werden vor der Formgebungsstufe emailliert. Anschließend werden sie erhitzt, damit das Glas sich verformen kann. Diese in der Regel mittels geeigneter Formmatrizen durchgeführte Stufe ermöglicht ebenfalls das Erhitzen des Emailles im Ofen. Auf diese Weise ballen sich die im Emaille enthaltenen Glasteilchen zu einer glatten und mechanisch widerstandsfähigen Schicht zusammen, die fest mit der Trägerglasplatte verbunden ist. Die Formgebung erfolgt also in heißem Zustand, und zwar bei einer Temperatur T, bei der nur das Emaille viskos ist. Diese Temperatur T ist in der Regel um 100 bis 200°C und meistens um etwa 150°C höher als der Glaspunkt Tg.

Ohne die erfindungsgemäße Polarisation verklebt das Emaille mit dem Überzug der Formmatrize von Verglasungen. Bei dem Überzug der Matrize handelt es sich in der Regel um ein Draht-"geflecht". In Wirklichkeit handelt es sich um ein Gestrick, seltener um ein Keramikpapier (vom Typ Löschpapier aus Keramikfasern). Auf jeden Fall muß dieses Keramikpapier bei der Betriebstemperatur ausreichend elektrisch leitend sein, um sich beim erfindungsgemäßen Verfahren positiv aufzuladen.

Emaille ist eine Mischung aus Glaspulver, das man Fritte nennt (ein Emaille kann eine oder mehrere Fritten enthalten), und einem oder mehreren Pigmenten, bei denen es sich um Pulver von Farbmitteln und/oder in der Regel kristallinen Trübungsmitteln handelt, die zur Färbung und Trübung der Emailleschicht beitragen. Außerdem können die Feststoffe des Emailles Antihaft-Zusatzstoffe und Behandlungshilfsstoffe enthalten. Die Pulvermischung wird anschließend einem organischen Medium zugemischt, daß im Verlauf des Erhitzens des Emailles im Ofen entweicht, wodurch ermöglicht wird, daß das Emaille in Form einer viskosen Paste, meistens durch Siebdruck, aufgetragen werden kann. Nach dem Erhitzen im Ofen erhält man einen zum Teil glasartigen Belag. Nach dem Erhitzen im Ofen liegt dessen Stärke gewöhnlich zwischen 15 und 25 Mikrometern.

Das Verkleben des Emailles mit den Überzügen der Formmatrize wird in der Regel durch die glasartige Phase des Emailles (Fritten) hervorgerufen. Die Pigmente und Antihaft-Zusatzstoffe sind gegenüber den Überzügen der Matrize inert und tragen darüber hinaus ganz allgemein mittels eines mechanischen Effekts zu einer gewissen Verminderung des Verklebens bei.

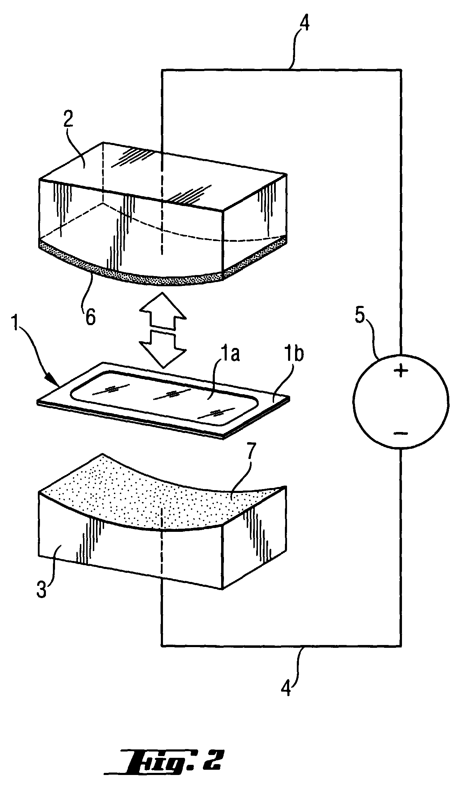

Die vorliegende Erfindung beseitigt jegliche Heißverklebungsprobleme zwischen dem Emaille und dem Überzug der Formmatrize und ergibt somit Verglasungen mit verbesserter Oberflächengüte, die durch Polarisation des System aus Matrize/emaillierter Verglasung (siehe Abbildung 2) erzielt wird. Diese Polarisation entsteht durch Anschließen der elektrisch leitenden Schicht 6 der Matrize 2 und der elektrisch leitenden Schicht 7 des Verglasungsträgers 3 an eine Strom- bzw. Spannungsquelle 5 mit unter Spannung stehenden elektrischen Drähten 4, durch die ein elektrischer Strom fließen oder an die eine Spannung angelegt werden kann. Damit die vorliegende Erfindung anwendbar ist, verwendet man ein System, das an einen Kondensator angepaßt werden kann, d.h., daß man über zwei Bauteile 6 und 7 verfügt, die den elektrischen Strom leiten und als Kondensatorbeläge wirken, wobei die Verglasung 1 aus einem Glasfenster (1a) und einem Emaille (1b) besteht, das das Dielektrikum oder einen Teil des Dielektrikums darstellt. Das Emaille kann jedoch bei hoher Temperatur als relativ guter Ionenleiter wirken. Somit muß zumindest ein Teil des Aufbaus aus Matrize/Matrizenüberzug ein guter elektrischer Leiter sein (im vorliegenden Fall Matrizenüberzug 6). Analog muß zumindest ein Teil des Verglasungsträgers, der als Elektrode dient, bei der Betriebstemperatur ein guter elektrischer Leiter sein (im vorliegenden Fall leitende Schicht 7 des Trägers 3).

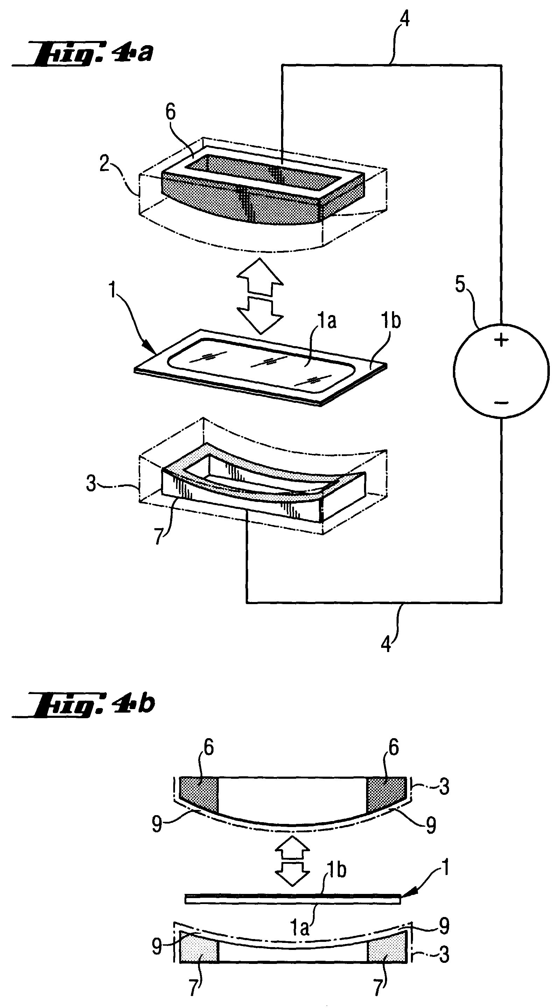

Gemäß der Ausführungsform der Abbildungen 4a und 4b müssen die gut leitenden Teile 6 und 7 so angebracht sein, daß die mit Emaille überzogenen und somit beim Formgebungsvorgang zu Verklebungsproblemen führenden Teile (1b) der Verglasung (1) durch die ersteren gut umrahmt sind. Die Glasteile der Verglasung (1a), die nicht mit Emaille überzogen sind und nicht zu Verklebungsproblemen führen, werden keiner besonderen Behandlung unterzogen: Sie müssen von den Teilen 6 und 7 nicht umrahmt sein; werden sie jedoch von diesen Teilen 6 und 7 umrahmt, so hat dies keine nachteiligen Auswirkungen auf den Formgebungsvorgang der Verglasungen. Die Teile 6 und 7 müssen nicht vollkommen eben und parallel sein. Anders ausgedrückt, muß kein ebener Kondensator hergestellt werden. Die weiteren, den Aufbau aus Formmatrize/Matrizenüberzug darstellenden Materialien können ebenso wie der die Verglasung tragende Rahmen bei Umgebungstemperatur elektrische Isolatoren sein. Die bei Umgebungstemperatur isolierenden Teile 9, die sich zwischen den zwei Teilen des Systems (siehe Abbildung 4b) befinden und an die Beläge eines Kondensators angepaßt werden können, müssen jedoch bei den erhöhten Temperaturen, bei denen die Verglasungen gebildet werden, ausreichend gute Elektronen- oder Ionenleiter darstellen.

Die Anschlüsse 4 der Abbildung 4a werden direkt auf dem elektrisch aktiven Teil 6 des Formmatrizen-Matrizenüberzug-Aufbaus und auf dem elektrisch aktiven Teil 7 des Verglasungsträgers so aufgebracht, daß sich das elektrische Feld über den gesamten, den emaillierten Teil der Verglasung bedeckenden Bereich erstreckt. Zu diesem Zweck kann es erforderlich sein, auf jedem Element, d.h. auf den jeweils leitenden Teilen (Schichten) der Matrize bzw. des Trägers, mehrere Anschlüsse anzubringen. Die Strom- bzw. Spannungsquelle 5 kann aus einem oder mehreren in Serie geschalteten Akkus oder einer oder mehreren in Serie geschalteten Trockenbatterien oder auch aus umgewandeltem oder gleichgerichtetem Wechselstrom oder einer beliebigen anderen Strom- bzw. Spannungsquelle bestehen, mit der sich die erforderliche Polarisation erzielen läßt. Die positive und die negative Klemme werden an die Matrize bzw. den Träger angeschlossen. Auf diese Weise übernimmt der Formmatrizen-Matrizenüberzug-Aufbau die Rolle der Anode, während der die Verglasung tragende Rahmen die Rolle der Kathode übernimmt. Die vorliegende Erfindung kann somit durch den Begriff "Antihaft-Anode" gekennzeichnet werden.

Die Polarisation läßt sich neben einer direkt an die Formmatrize und den Verglasungsträger angeschlossenen Strom- oder Spannungsquelle auch mit jedem beliebigen anderen Mittel erzielen. Beispielsweise kann man sich gemäß Abbildung 5 einen Kondensator vom Plattentyp vorstellen, der mittels unter Spannung stehender elektrischer Drähte 4 an eine Strom- bzw. Spannungsquelle 5 angeschlossen ist, so daß die Beläge (= Platten) 8 dieses Kondensators auf der einen oder anderen Seite der Formmatrize 2 und des Verglasungsträgers 3 angeordnet sind, ohne damit in physischem Kontakt zu stehen. In diesem Fall müssen die Matrize und der Träger keinen elektrisch leitenden Teil aufweisen.

In dem System können mehrere Isolatorschichten in Sandwichform vorliegen. Beispielsweise kann die Matrize außen aus Keramik bestehen, wobei sie mit einem Überzug aus keramischen Fasern beschichtet sein kann. Analog kann der die Verglasung tragende Rahmen mit Keramik überzogen sein. Bei den Glasformungstemperaturen müssen diese Isolatoren jedoch ausreichend gute Elektronen- oder Ionenleiter sein, und die an das System angelegte Spannung muß unbedingt gut eingestellt sein. Beispielsweise kann es beim Überziehen der Formmatrize mit einem Drahtgeflecht aus Edelstahl notwendig sein, während einer Verglasungsformungsoperation aufgrund der Alterung des Drahtgeflechts, durch die zwischen dem Leiter und der Verglasung (ein Bereich, der einen Teil des Bereichs 8 der Abbildung 4 bildet) zunehmend eine elektrisch weniger gut leitende Oxidzone (Eisen-, Chrom- und Nickeloxid) entsteht, im Laufe der Zeit die angelegte Spannung zu erhöhen. Die Qualität des Kontakts zwischen dem Isolator und dem Träger, der zum Teil als Elektrode dient, beeinflußt die Antiklebewirkung. Die Antiklebewirkung ist umso besser, je besser der Kontakt ist. Bei einem schlechten Kontakt oder sogar einem Abstand zwischen dem Isolator und der Elektrode muß man eine höhere Spannung anlegen, damit eine gute Antiklebewirkung erzielt wird.

### 2. Geformtes Glas:

Die vorliegende Erfindung läßt sich zur Herstellung von geformtem Glas verwenden. Die Formgebung des Glases erfolgt in den meisten Fällen in zwei Schritten, außer bei der Herstellung von stark ausgebauchten Stücken, wie z.B. Salatschüsseln oder Glühschalen. Zwei Verfahrensweisen sind möglich. Lediglich der erste Schritt, d.h. das Vorformen, unterscheidet sich von einer Verfahrensweise zur anderen: Die Ausbauchung der geformten Stücke erfolgt durch Pressen oder Blasen. Bei relativ stark ausgebauchten Gefäßen ist lediglich der erste Schritt (Pressen) notwendig. Beim Vorformen kommt es nicht so sehr auf die Oberflächengüte an, vorausgesetzt, die Oberfläche enthält nicht zu viele Markierungen. Beim ersten Schritt muß man somit nicht immer nach der vorliegenden Erfindung arbeiten. Im Falle eines einzigen Preßschritts muß der Preßvorgang hingegen eine einwandfreie Oberfläche der Teile ergeben, so daß die vorliegende Erfindung schon vom ersten Formungsschritt an von Nutzen sein kann. Der zweite Schritt besteht in der endgültigen Formgebung der Glasteile. Dieser Schritt ist für die Oberflächengüte der geformten Gegenstände von großer Bedeutung. Aus diesem Grund muß jegliche Verklebungserscheinung zwischen dem Glas und der Form unterbunden werden.

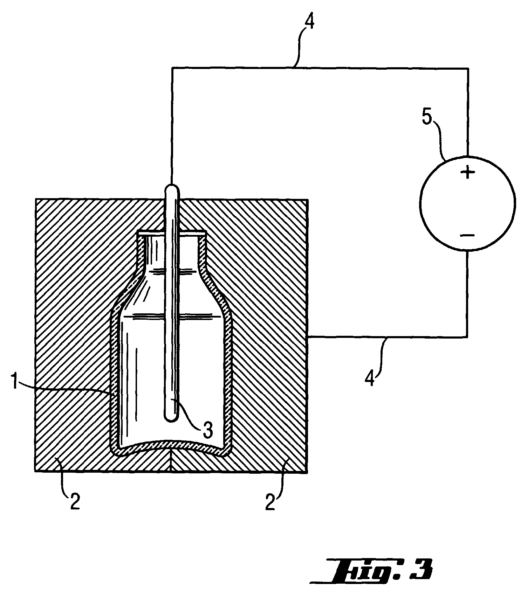

Gemäß Abbildung 3 läßt sich die vorliegende Erfindung zur Herstellung von geformtem Glas verwenden, indem man die leitende Form 2 mit einem Leitungsdraht 4 an eine Strom- bzw. Spannungsquelle 5 anschließt. Die zweite Klemme der Quelle kann mit einem mit dem vorhergehenden Draht 4 identischen Leitungsdraht an eine als Elektrode 3 dienende Art Metallstift angeschlossen werden, der in das Innere der Vorform gleitet, jedoch jeglichen Kontakt mit dem Glas 1 vermeidet. Nach Herausnahme des Gegenstands aus der Form wird der Stift vom Gegenstand ohne Schwierigkeiten und ohne daß auf dem Gegenstand Markierungen zurückbleiben, entfernt.

Der Innenkontakt kann mit einem beliebigen anderen System erfolgen, wobei bestimmte dieser Systeme auf einem direkten Kontakt im Innern des geformten Gegenstands zwischen der Elektrode und dem Gegenstand beruhen können, jedoch so, daß keine Markierungen im Innern des Gegenstands entstehen.

Mittels der vorliegenden Erfindung wird das Heißverkleben bei Isolatoren mit einer glasartigen Phase durch Durchführung des Formgebungsverfahrens in einem elektrischen Feld merklich verringert und meistens ganz unterbunden. Mittels der Erfindung läßt sich eine erhöhte Oberflächengüte des zu formenden Gegenstands erzielen. Prozesse, die nach dem erfindungsgemäßen Verfahren arbeiten, sind weniger störanfällig. Das Prinzip der Erfindung läßt sich leicht auf bereits vorhandene Vorrichtungen zur Formgebung von glasartigen Materialien anwenden.

### Beispiel 1: Fritte und Emaille für Autoglas

Bei dem verwendeten Matrizenüberzug handelt es sich um ein Drahtgeflecht aus Edelstahl, das auf dem Gebiet der Formgebung von Autoglas sehr häufig verwendet wird.

Ein bei Emailles für Autoverglasungen typische Art von Fritte kann folgende Zusammensetzung (Gew.-%) aufweisen:

| Oxid | Gew.-% |
|---|---|
| Na₂O | 10 - 20 |
| SiO₂ | 30 - 40 |
| TiO₂ | 2 - 10 |
| B₂O₃ | 10 - 15 |
| ZnO | 17 - 25 |
| ZnS | 10 - 20 |

In dem vorliegenden Beispiel bestand die Fritte im wesentlichen aus (Gew.-%): Na₂O 16, SiO₂ 34, TiO₂ 5, B₂O₃ 11, ZnO 21 und ZnS 13. Diese Fritte wurde auf herkömmliche Weise mittels Siebdruck auf eine Glasplatte aufgedruckt. Das Brennen im Ofen wurde unter Verwendung eines Laborgeräts analog dem normalerweise in der Technik verwendeten durchgeführt.

Bei einem angelegten Druck von 35,5 x 10³ Pa und einer Temperatur von 670°C wurde ohne Verwendung der vorliegenden Erfindung eine Klebekraft von 12,6 x 10³ Pa gemessen. Beim Anlegen einer Spannung von 9 V, was einem elektrischen Feld von 22,5 V x cm⁻¹ entspricht, wurde beim gleichen Druck und bei der gleichen Temperatur eine Klebekraft von nur 5,3 x 10³ Pa gemessen.

Für das aus dieser Fritte und einem schwarzen Pigment (Gewichtsverhältnis von 70 zu 30) hergestellte Emaille wurde ohne Anlegen einer Spannung unter den gleichen Druck- und Temperaturbedingungen eine Klebekraft von 10,9 x 10³ Pa gemessen. Beim Anlegen einer Spannung von 9 V, d.h. einem elektrischen Feld von 22,5 V x cm⁻¹, betrug die Klebekraft Null. Den gleichen Effekt konnte man auch bei Verwendung von Fritten/Emailles mit verschiedener Frittenzusammensetzung feststellen.

Abbildung 7 zeigt die Änderungen der Klebekraft in Abhängigkeit von der angelegten Spannung.

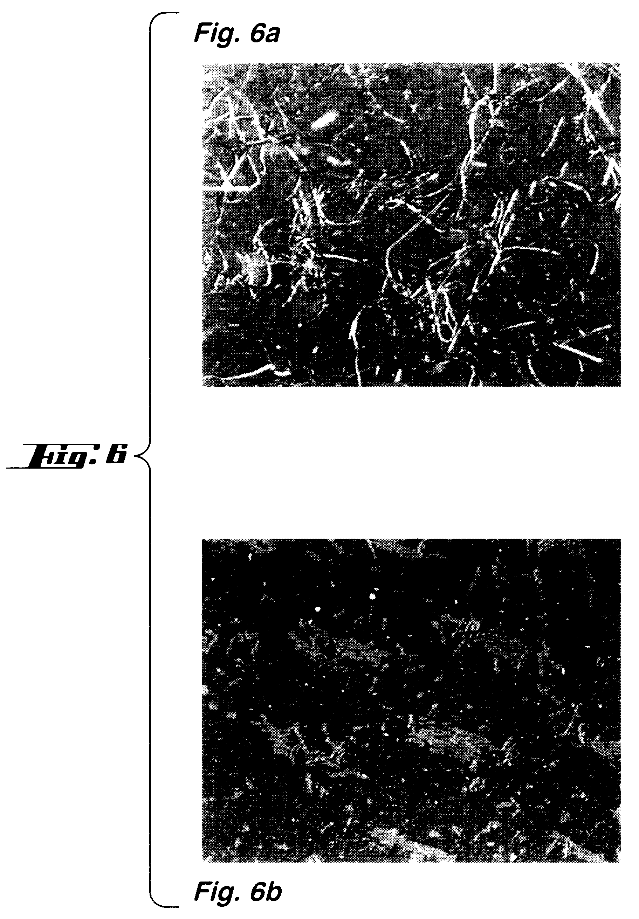

Der Unterschied zwischen Verkleben und Nichtverkleben ist auf den der Prüfung unterzogenen Platten gut erkennbar. Beim nicht polarisierten System (siehe Abbildung 6a) bleiben zahlreiche Fasern des Matrizenüberzugs mit der Emailleoberfläche verklebt. Beim polarisierten System (siehe Abbildung 6b) ist die Zahl der Fasern des Matrizenüberzugs, die mit dem Emaille verklebt bleiben, praktisch Null. Hierbei handelt es sich um die Fasern, die in das Geflecht eingebaut wurden und die sich vom Drahtgeflecht getrennt hätten, unabhängig von den Prüfbedingungen und davon, ob eine klebende oder nichtklebende Emaillezusammensetzung verwendet wurde. Man stellt leichte Markierungen auf der Emailleoberfläche fest, die beweisen, daß zwischen dem metallischen Matrizenüberzug und dem Emaille inniger Kontakt bestand. Diese Markierungen sind jedoch nicht sehr ausgeprägt, so daß sie das ästhetische Erscheinungsbild der emaillierten Schicht nicht beeinflussen. Außerdem sind sie von der Glasseite aus vollkommen unsichtbar.

Die Qualität der Kontakte zwischen den Leitungsdrähten und den verschiedenen Elementen spielt eine wichtige Rolle hinsichtlich der bei der vorliegenden Erfindung zu erwartenden Ergebnisse. Die Prüfungen wurden an der Fritte durchgeführt, deren Zusammensetzung nachstehend angegeben ist, wobei die Ergebnisse der folgenden Tabelle zu entnehmen sind.

| Spannung (V) | Klebekraft (Pa) | |
|---|---|---|
| | schlechte Kontakte | gute Kontakte |
| 9 | 5,7 . 10³ | 1,4 . 10³ |
| 13,5 | 5,2 . 10³ | 1,5 . 10² |

Es wird daher empfohlen, gut auf die Verbindungen zwischen der Gleichstromquelle und den elektrischen Leitungselementen des Systems zu achten (beim vorliegenden Beispiel handelt es sich bei diesen Elementen um die Überzüge der Formmatrize und den Verglasungsträger).

### Beispiel 2

Hier wird die Wirkung der Temperatur und der angelegten Spannung auf eine Fritte für Emailles angegeben, die für die Flaschenherstellung vorgesehen sind.

Eine typische Fritte für diese Anwendung enthält:

| Oxid | Gew.-% |
|---|---|
| Na₂O | 10 - 20 |
| SiO₂ | 10 - 20 |
| NaF | 5 - 10 |
| B₂O₃ | 25 - 45 |
| ZnO | 30 - 40 |

Die Wirkung der Spannung ändert sich mit der Temperatur, wie aus dem Diagramm der Abbildung 8 ersichtlich ist. Die untersuchte Fritte bestand im wesentlichen aus (Gew.-%): Na₂O 12, SiO₂ 12, B₂O₃ 39, ZnO 31 und NaF 6.

Die Wirkung der angelegten Spannung ist die Differenz zwischen der ohne Spannung gemessenen Klebekraft und der unter Spannung gemessenen Klebekraft geteilt durch die ohne Spannung gemessene Klebekraft.

Laut Abbildung 8 nimmt die Antiklebewirkung (= Erniedrigung der Klebekraft) bei dieser Zusammensetzung mit der angelegten Spannung zu. Bei einer angelegten Spannung von 4,5 V neigt die Antiklebewirkung dazu, mit zunehmender Betriebstemperatur abzunehmen. Umgekehrt neigt die Antiklebewirkung bei einer angelegten Spannung von 9 V dazu, mit zunehmender Betriebstemperatur zuzunehmen.

Es ist daher wichtig, eine gute Kenntnis des Isolator-Formmatrizen-Systems zu besitzen, um die besten Spannungs- und Temperaturbedingungen unter Beachtung der von dem Formgebungsverfahren vorgegebenen Randbedingungen einstellen zu können.

### Beispiel 3: Glas für die Flaschenindustrie

Zur Ermittlung der Klebekraft wurde ein in der Flakonindustrie verwendetes Glas untersucht, das aus (Gew.-%): SiO₂ 76, Al₂O₃ 4, CaO 1, Na₂O 5, K₂O 0,5 und B₂O₃ 13,5 bestand. Es wurde wie eine Fritte behandelt: Es wurde zuerst gemahlen, dann auf eine Glasplatte aus herkömmlichen Glas mit einer nur wenig vom Glas für die Flakonherstellung unterschiedlichen Zusammensetzung aufgetragen.

Bei 740°C wurde eine Klebekraft von mindestens 16,5 x 10³ Pa ohne Anlegen einer Spannung gemessen. Bei Anlegen einer Spannung von 9 V bei der gleichen Temperatur und dem gleichen angelegten Druck beträgt die Klebekraft nicht mehr als 1,5 x 10³ Pa.

Zahlreiche weitere Zusammensetzungen wurden bei verschiedenen Temperaturen und angelegten Spannungen untersucht und ergaben als Ergebnis in allen Fällen eine wesentliche Verringerung der Klebekraft und eine verbesserte Oberflächengüte.

## Patentansprüche

1. Verfahren zur Verringerung des Heißverklebens zwischen einer Matrize und einem nichtmetallischen anorganischen Material (= Isolator), die bei einer Temperatur, bei der der Isolator verformbar ist, miteinander in Kontakt stehen,
dadurch gekennzeichnet,
daß man einen Aufbau aus Matrize und Isolator während der Kontaktierung in polarisiertem Zustand hält, so daß die Fläche der mit dem Material in Kontakt kommenden Matrize positiv und die Fläche des mit der Matrize in Kontakt kommenden Materials negativ aufgeladen ist.

2. Verfahren nach Anspruch 1,
dadurch gekennzeichnet,
daß mindestens ein Teil des mit der Matrize in Kontakt kommenden Isolators im glasartigen Zustand vorliegt.

3. Verfahren nach Anspruch 2,
dadurch gekennzeichnet,
daß mindestens der mit dem glasartigen Teil des Isolators in Kontakt kommende Teil der Matrize aus einem Metall, einer Metallegierung oder einem Halbleiter gefertigt ist.

4. Verfahren nach einem der Ansprüche 1 bis 3,
dadurch gekennzeichnet,
daß der polarisierte Zustand durch Anlegen einer Spannung bzw. eines Stroms an den Aufbau mittels eines Plattenkondensators, dessen Beläge (= Platten) auf beiden Seiten des Aufbaus angeordnet sind, oder durch Induzieren eines Stroms an der Isolator-Matrizen-Grenzfläche hergestellt und aufrechterhalten wird.

5. Verfahren zur Herstellung eines geformten nichtmetallischen anorganischen Materials (= Isolator) mit verbesserter Oberflächengüte, das darin besteht, daß man ein nichtmetallisches anorganisches Material (= Isolator) mit einer Formmatrize bei einer Formgebungstemperatur in Kontakt bringt, so daß der Isolator geformt wird, und der geformte Isolator und die Matrize anschließend voneinander getrennt werden,
dadurch gekennzeichnet,
daß man den Aufbau aus Isolator und Matrize polarisiert, so daß sich die dem Isolator zugewandte Fläche der Matrize positiv und die der Matrize zugewandte Fläche des Isolators negativ auflädt und daß man die Polarisation während des Kontakts bis zum Zeitpunkt der Trennung aufrechterhält.

6. Verfahren nach Anspruch 5,
dadurch gekennzeichnet,
daß mindestens ein Teil des mit dem Leiter in Kontakt kommenden Isolators im glasartigen Zustand vorliegt.

7. Verfahren nach Anspruch 6,
dadurch gekennzeichnet,
daß mindestens der mit dem glasartigen Teil des Isolators in Kontakt kommende Teil der Matrize aus einem Metall, einer Metallegierung oder einem Halbleiter gefertigt ist.

8. Verfahren nach einem der Ansprüche 5 bis 7,
dadurch gekennzeichnet,
daß der zu polarisierende Aufbau weiterhin eine Elektrode umfaßt, so daß die Matrize sich als Anode und der Isolator sich als Kathode verhält.

9. Verfahren nach einem der Ansprüche 5 bis 8,
dadurch gekennzeichnet,
daß die Polarisation und ihre Aufrechterhaltung dadurch erfolgen, daß man (i) an den Aufbau eine Spannung oder einen Strom anlegt oder (ii) den Aufbau parallel zwischen der negativen Klemme und der positiven Klemme eines Plattenkondensators anordnet, dessen Platten an eine Strom- bzw. Spannungsquelle angeschlossen sind oder (iii) an der Isolator-Matrizen-Grenzfläche einen Strom induziert.

10. Verfahren nach einem der Ansprüche 5 bis 9,
dadurch gekennzeichnet,
daß
der Isolator ein Autoglas ist, das zumindest zum Teil mit einer Dekorationsschicht versehen ist, die im Ofen einbrennbar ist, und
die Matrize, der Isolator und eine Elektrode, auf der dieser Isolator so angebracht ist, daß die Elektrode als Gegenstück zur Matrize dient, zusammen bei einer Temperatur verpreßt werden, die so hoch ist, daß die Schicht im Ofen eingebrannt wird, so daß das Glas unter Aufrechterhaltung der Polarisation gebogen werden kann.

11. Verfahren nach einem der Ansprüche 5 bis 9,
dadurch gekennzeichnet,
daß der Isolator durch Blasen geformt wird, so daß die als Anode dienende und auf der einen Seite des Isolators angebrachte Formmatrize (= Matrize) und ein als Kathode dienendes und auf der anderen Seite des Isolators angebrachtes elektrisch leitendes Element (= Elektrode) zur Polarisierung des im wesentlichen aus der Matrize, dem Isolator und der Elektrode bestehenden Aufbaus an eine Spannungs- oder Stromquelle angeschlossen werden.

12. Vorrichtung zur Verringerung des Heißverklebens zwischen einer Matrize und einem nichtmetallischen anorganischen Material (= Isolator), die miteinander in Kontakt stehen, in einem Formgebungsverfahren bei einer Formgebungstemperatur,
dadurch gekennzeichnet,
daß sie eine als Leiter dienende Matrize (2), eine Elektrode (3), die als Gegenstück zur Matrize und/oder als Träger für einen zu formenden Isolator (1) dienen kann, wobei die Elektrode der Matrize in einem mindestens der Dicke des Isolators entsprechenden Abstand gegenüberliegt, sowie Mittel (5) zur Polarisierung des Aufbaus aus Leiter (2), Isolator (1) und Elektrode (3) umfaßt, wobei diese Mittel (5) mit unter Spannung stehenden elektrischen Drähten (4) an die Matrize und die Elektrode oder an die beiden Platten (8) eines Kondensators vom Typ Plattenkondensator angeschlossen sind, wobei diese Platten auf beiden Seiten des Aufbaus angeordnet sind.

13. Vorrichtung nach Anspruch 12,
dadurch gekennzeichnet,
daß die Mittel (5) eine Strom- oder Spannungsquelle aufweisen.
